# EUROPÄISCHE PATENTSCHRIFT

(11) **EP 1 878 961 B1**
(45) Veröffentlichungstag und Bekanntmachung des Hinweises auf die Patenterteilung: **05.08.2009**
(21) Anmeldenummer: 07006183.3
(22) Anmeldetag: 26.03.2007
(51) Int. Cl.: F16L 11/04, B29C 35/10, B29C 71/04, C08J 7/18

(54) **Flexibler Schlauch**
Flexible hose
Tuyau flexible

(30) Priorität: 14.07.2006 DE 102006032751
(43) Veröffentlichungstag der Anmeldung: 16.01.2008
(73) Patentinhaber: VERITAS AG, 63571 Gelnhausen (DE)
(72) Erfinder: van Hooren, Marc, 63579 Freigericht (DE); Seyler, Andreas, 63584 Gründau (DE); Poeppel, Artur, 63571 Gelnhausen (DE)
(74) Vertreter: Grünecker, Kinkeldey, Stockmair & Schwanhäusser Anwaltssozietät

(56) Entgegenhaltungen:
- EP-A- 0 700 673
- EP-A- 1 362 890
- EP-A- 1 396 670
- DE-A1- 2 934 486
- DE-A1-2102004 056 27
- DE-A1-6102004 061 98
- JP-A- 8 057 035
- US-A1- 2001 016 727

## Beschreibung

Die Erfindung betrifft einen flexiblen Ladeluftschlauch für Automobile gemäß dem Oberbegriff des Anspruchs 1.

Ein derartiger Schlauch ist aus der DE 29 34 486 A1 bekannt.

Man kennt bereits Leitungssysteme, die sowohl aus starren als auch aus flexiblen Komponenten bestehen. Derartige Leitungen werden z.B. im Automobilbau als Ladeluftleitungen eingesetzt, vorzugsweise bei Verbrennungsmotoren mit Turboladern. Unter Ladeluftleitungen werden die Verbindungen zwischen Lader, Resonator, Ladeluftkühler und Motoreinlass verstanden. Solche Ladeluftschläuche sind dynamisch hochbelastete Konstruktionen. Typische Ladeluftschläuche verfügen über eine Wandung mit mehreren Schichten aus elastomerem Material.

Flexible Leitungskomponenten kommen dann zum Einsatz, wenn Relativbewegungen zwischen Motor und Chassis von der Ladeluftleitung aufgenommen werden müssen. Dies ist nahezu bei allen Fahrzeugen der Fall, da der Ladeluftkühler dort am Chassis befestigt ist. Hier haben sich flexible Schläuche auf Elastomerbasis bewährt, wobei ein gewebeverstärkter Elastomerformschlauch die Weichkomponente bildet. Für die Weichkomponente sind ebenfalls thermoplastische Elastomere, beispielsweise Copolyamidelastomere (TPE-A), elastomere Polyetherester (TEE-E), Polyurethanelastomere (TPE-U) bzw. elastomermodifizierte Thermoplaste geeignet.

Die starren Leitungskomponenten bzw. die Hartkomponenten der entsprechenden Leitung werden üblicherweise aus Metallrohren oder mit Glasfaser verstärkten Thermoplastrohren aus Polyamid (PA), Polybutylenterephthalat (PBT), Polyphenylensulfid (PPA) etc. gebildet. Derartige Leitungskomponenten weisen eine sehr geringe Flexibilität auf. Sie kommen dann zum Einsatz, wenn ein Befestigungspunkt an der Ladeluftleitung erforderlich ist oder sich die Leitung in einem bestimmten Bereich nicht verformen oder verschieben darf.

Ladeluftrohre werden gewöhnlich mittels 3D Blasformtechnik bzw. im Spritzgießverfahren hergestellt, wobei die Hart- und Weichkomponenten durch Verbindungselemente wie Kupplungen oder Schlauchschellen verbunden werden.

Die herkömmlichen Schläuche mit starren und flexiblen Abschnitten haben jedoch den Nachteil, dass zur Herstellung der Komponenten unterschiedliche Materialien bereitgestellt, verarbeitet und anschließend dauerhaft verbunden werden müssen, wobei an den Verbindungsstellen bei Dauergebrauch im hohen Temperaturbereich oftmals Undichtigkeiten auftreten. Zusätzlich führen beim Einsatz in Form von Ladeschläuchen die großen dynamischen Belastungen, vor allem zunehmende Ladedrücke und zunehmende Leistungen der Verbrennungsmotoren immer wieder zu Schäden, vor allem an den Verbundstellen.

Der Erfindung liegt daher die Aufgabe zugrunde, einen Schlauch, insbesondere Ladeluftschlauch mit starren und flexiblen Abschnitten bereitzustellen, der kostengünstiger herstellbar und gegenüber Materialversagen bei Dauergebrauch weniger anfällig ist als ein herkömmlicher Schlauch.

Zur Lösung dieser Aufgabe stellt die Erfindung einen flexiblen Ladeluftschlauch für Automobile gemäß Anspruch 1 bereit. Durch das bereichsweise Vernetzen des flexiblen Schlauchs lassen sich an dem flexiblen Schlauch bereichsweise im Wesentlichen starre Abschnitte ausbilden, so dass der erfindungsgemäße Schlauch im Gegensatz zu herkömmlichen Leitungen nicht aus unterschiedlichen Hart/Weich-Komponenten zusammengesetzt werden muss. Daher ist der erfindungsgemäße Schlauch in Bezug auf Undichtigkeiten wesentlich weniger anfällig als herkömmliche Schläuche. So entfällt beim erfindungsgemäßen Schlauch auch die Leitungsmontage aus einzelnen Hart- und Weichkomponenten. Damit verbunden ist auch eine Gewichtsreduzierung der gesamten Leitung, da der erfindungsgemäße Schlauch ohne die Verbindungselemente wie z.B. Kupplungen oder Schlauchschellen auskommt. Zusätzlich entfallen die Beschaffungskosten für Verbindungselemente.

Erfindungsgemäß weist der Schlauch in Umfangsrichtung unterschiedliche Vemetzungsgrade auf. Dies hat den Vorteil, dass bei einer Biegebeanspruchung des Schlauchs ein flexibler Abschnitt als Biegungsrücken ausgebildet sein kann, während ein weniger flexibler Abschnitt die Biegekehle bildet und ein Einknicken auch bei starker Krümmung verhindert.

Durch Vernetzen wird das mechanische Eigenschaftsprofil des Schlauchs hinsichtlich des Steifigkeitsmoduls (E-Modul), der Festigkeit und Härte modifiziert, so dass starre bzw. rohrartige Bereiche ausgebildet werden, da ein direkter Zusammenhang zwischen Steifigkeit bzw. Elastizität und Vernetzungsgrad besteht. Zugfestigkeit, Bruchdehnung und Härte steigen insbesondere bei erhöhten Temperaturbelastungen (Steigerung der Wärmeformbeständigkeit) durch die entstandenen Vernetzungsstellen an. Gleichzeitig werden die dynamischen Eigenschaften hinsichtlich der Wechselbiegefestigkeit und des Zeitstandverhaltens unter Innendruck verbessert, was ebenso für die Kriechfestigkeit und die Spannungsrissbeständigkeit gilt.

Darüber hinaus wird durch die Vernetzung die Chemikalienbeständigkeit, insbesondere die Hydrolyse- und Ölbeständigkeit sowie das Quellverhalten verbessert. Eine weitere Verbesserung tritt durch hinsichtlich des Setzungsverhaltens und der Druckverformung ein. Zudem weist der Schlauch eine höhere Alterungsbeständigkeit auf.

Aufgrund der bereichsweise unterschiedlichen Vernetzungsgrade weist der Schlauch bereichsweise unterschiedliche mechanische und dynamische Eigenschaften auf, wobei der Schlauch bevorzugt einteilig hergestellt ist.

In einer bevorzugten Ausführungsform weist der Schlauch in Axialrichtung unter-schiedliche Vemetzungsgrade auf. Dabei ist vorzugsweise in Axialrichtung zwischen zwei starren Abschnitten ein flexibler Abschnitt vorgesehen.

In einer weiteren bevorzugten Ausführungsform umfasst das vernetzbare Material einen vernetzbaren Thermoplast sowie einen thermoplastischen Elastomer. Dazu ist es zweckmäßig, dass beide Materialien chemisch äquivalent bzw. aus der gleichen Werkstoffklasse sind, z.B. PA6 und thermoplastisches Elastomer auf Basis von PA6. Dadurch wird die Haftung im Bereich der Grenzschicht durch Werkstoffkompatibilität, d. h. interdiffusion der Polymerketten im Bereich der Grenzschicht und durch nachfolgende strahleninduzierte Vernetzung erhöht. Bei faserverstärkten Materialien wird zusätzlich eine optimierte Faser-Matrixanhaftung erreicht. Das mechanisch-dynamische Eigenschaftsprofil und die Temperaturstabilität insbesondere der Weichkomponente als schwächstes Glied des erfindungsgemäßen Schlauchs, wird durch gezielte Mehrkomponentenauswahl beeinflusst und optimiert. Thermoplastische Elastomere und Thermoplaste werden gewöhnlich nicht vernetzt und können aufgrund der hohen Verarbeitungstemperaturen bei der Extrusion bzw. im Spritzguß- oder Blasformverfahren im Gegensatz zu Elastomeren auch nicht chemisch vernetzt werden. Jedoch sind die Materialien dieser Stoffklassen einer Vernetzung mittels energiereicher Strahlung (i.d.R. Elektronenstrahlung mit Dosen von ca. 80 bis 200 KGy) zugänglich.

In einer weiteren bevorzugten Ausführungsform wird als Additivkomponente ein Vernetzungsverstärker bzw. Koaktivator zugesetzt. Durch die Wahl des Vernetzungsverstärkers bzw. Koaktivators und dessen Gehalt lässt sich der Vernetzungsgrad bzw. die Vernetzungsdichte des Schlauchs je nach Bedarf einstellen. Beispiele für geeignete Koaktivatoren sind trifunktionelle ungesättigte Verbindungen, wie Triallylisocyanurat (TAIC), Triallylcyanurat (TAC), Trimethylallylisocyanurat (TMAIC), Trimethylolpropanetriacrylat (TMPTR) etc.. Die Koaktivatoren können bi- oder multifunktionale Netzknoten bilden. Ähnlich der Peroxidvemetzung werden im ersten Schritt bei der Bestrahlung reaktive Radikale an der Polymerhauptkette bzw. an den funktionellen Polymergruppen gebildet, die dann mit den Coaktivatoren reagieren und mehrere Polymerketten miteinander verbinden, so dass ähnlich den Elastomeren ein Netzwerk ausgebildet wird. Dadurch werden die Basiseigenschaften der thermoplastischen Elastomere bzw. Thermoplastmaterialien grundlegend verändert und beispielsweise im Hinblick auf den Einsatz in Turboladersystemen optimiert.

In einer weiteren bevorzugten Ausführungsform wird die abschnittsweise Vernetzung durch Bestrahlung erreicht. Besonders bevorzugt werden β- oder γ-Strahlen verwendet. Die Strahlenvernetzung hat gegenüber der peroxidischen Vernetzung oder der Silanvernetzung den Vorteil, dass der zu bestrahlende Abschnitt der Schlauchs genau definiert werden kann.

In einer weiteren bevorzugten Ausführungsform weist der Schlauch ein Verstärkungsmaterial auf. Dadurch wird dem Schlauch eine höhere Druckbeständigkeit verliehen. Als besonders vorteilhaft hat sich eine faserverstärkte, thermoplastische Matrix oder eine faserverstärkte Matrix von thermoplastischen Elastomeren herausgestellt.

In einer weiteren bevorzugten Ausführungsform ist der Schlauch glasfaserverstärkt. Glasfasermaterialien weisen bei geringem Gewicht eine besonders hohe Zugfestigkeit auf und sind leicht verarbeitbar. Ein glasfaserverstärkter Schlauch zeichnet sich aufgrund seiner hohen Steifigkeit durch eine besonders hohe thermomechanische Belastbarkeit aus.

In einer besonders bevorzugten Ausführungsform der Erfindung ist der Schlauch als Ladeluftleitung für Automobile ausgebildet. Die Erfindung betrifft daher auch die Verwendung eines flexiblen Schlauchs nach einer der vorangegangenen Ausführungsformen als Ladeluftleitung im Automobilbereich. Die besonderen Eigenschaften des erfindungsgemäßen Schlauchs können bei einer Anwendung als Ladeluftleitung im Automobilbereich besonders vorteilhaft zur Geltung gebracht werden.

Zur besseren Verständlichkeit der Erfindung wird ein nicht zur Erfindung gehörendes Verfahren zur Herstellung eines flexiblen Schlauchs mit bereichsweise unterschiedlichen Vernetzungsgraden angegeben, umfassend die Schritte: Bereitstellen eines flexiblen Schlauchs, umfassend zumindest ein vernetzbares Material, Maskieren von nicht zu vernetzenden Abschnitten des Schlauchs und Vernetzen von zu vernetzenden Abschnitten des Schlauchs. Durch das Verfahren werden scharf abgegrenzte, flexible und starre Abschnitte bei einem einteiligen Schlauch ausgebildet.

Beispielsweise wird die Vernetzung durch Bestrahlung erreicht. Besonders bevorzugt werden β- oder γ-Strahlen verwendet. Außerdem umfasst das vernetzbare Material bevorzugt als Additivkomponente einen Vernetzungsverstärker bzw. Koaktivator. Über die Strahlensdosis und die Menge des Vemetzungsverstärkers bzw. Koaktivators ist der Vernetzungsgrad einstellbar.

Beispielsweise wird zur Maskierung eine gegenüber Strahlung abschirmende Metallfolie verwendet. Metallfolien sind leicht formbar und können dadurch die nicht zu vernetzenden Teile des Schlauches besonders einfach abschirmen.

Die vorliegende Erfindung wird nachstehend mit Bezug auf die beiliegenden Zeichnungen im Detail beschrieben.

### Kurze Beschreibung der Zeichnungen:

- Figur 1: zeigt einen erfindungsgemäßen Schlauch mit vernetzten Endabschnitten und einem im Wesentlichen unvernetzten Mittelabschnitt.
- Figur 2: zeigt einen erfindungsgemäßen Schlauch mit vernetzten Endabschnitten und einem im Wesentlichen unvernetzten, gekrümmten Mittelabschnitt, wobei der Schlauch ein Verstärkungsmaterial aufweist und der Mittelabschnitt wellenförmig ausgebildet ist.

### Detaillierte Beschreibung der bevorzugten Ausführungsbeispiele:

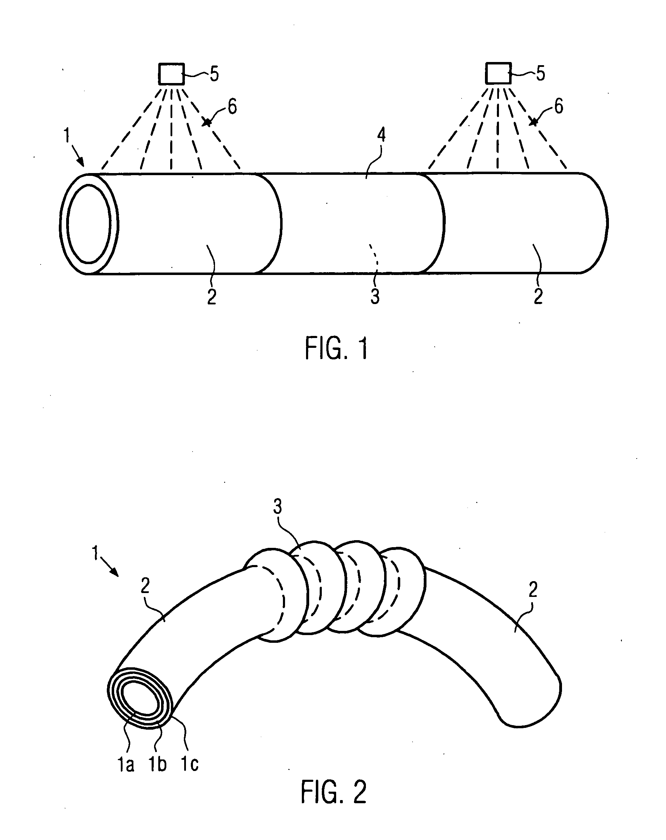

Figur 1 zeigt einen erfindungsgemäßen, flexiblen Schlauch 1, umfassend zumindest ein vernetzbares Material, wobei der Schlauch 1 bereichsweise unterschiedliche Vernetzungsgrade aufweist. In Axialrichtung des in Fig. 1 gezeigten, flexiblen Schlauchs 1 sind abwechselnd vernetze Abschnitte 2 und im Wesentlichen unvernetzte Abschnitte 3 angeordnet. Genauer gesagt sind die Endabschnitte 2 des Schlauchs 1 vernetzt, während der Mittelabschnitt 3 im Wesentlichen unvernetzt ist. In den vernetzten Abschnitten 2 ist der Schlauch 1 im Wesentlichen starr und weist einen höheren Vernetzungsgrad auf als in dem im Wesentlichen unvernetzten Abschnitt 3, in welchem der Schlauch 1 flexibel ist. Der Schlauch 1 kann mehrere vernetzte und unvernetzte Abschnitte aufweisen, die beliebig über die Schlauchwand verteilt sind.

So kann der Schlauch in Axialrichtung und/oder in Umfangsrichtung unterschiedliche Vernetzungsgrade, d.h. im Wesentlichen starre und flexible Abschnitte aufweisen. Die Ausbildung von im Wesentlichen starren und flexiblen Abschnitten richtet sich nach der gewünschten Verwendung des Schlauchs 1.

Das vernetzbare Material ist vorzugsweise ein Thermoplast oder ein thermoplastisches Elastomer. Analog der Basispolymere der thermoplastischen Materialien sind auch korrespondierende thermoplastische Elastomere wie z.B. TPE-A und TEE-E Typen (optional glasfaserverstärkt) durch Zusatz von KoaktivatorenNernetzungsverstärkern strahlenvernetzbar. Besonders geeignete Materialien sind Copolyamidelastomere (TPE-A), elastomere Polyetherester (TEE-E), Polyurethanelastomere (TPE-U), elastomermodifizierte Thermoplaste, sowie Mischungen davon.

In einer bevorzugten Ausgestaltungsform wird das vernetzbare Material in Form eines Einkomponentensystems verwendet. Das Einkomponentensystem ist besonders einfach in der Handhabung und Bereitstellung. Nach der Formgebung des Schlauches wird der Schlauch in einem nachgeschalteten Schritt sequentiell vernetzt. Durch Werkstoffidentität wird eine optimale Haftung der unterschiedlichen Segmente erreicht. Dies wiederum erhöht die Flexibilität hinsichtlich der Konstruktion und des Designs des Schlauchs und begünstigt die Verwirklichung eines optimierten Eigenschaftsprofils. Als zusätzlicher Vorteil können Produktionsabfälle und nicht verwendete Materialen wiederverwendet werden, da die Vernetzung erst in einem nachgeschalteten Arbeitsschritt erfolgt. Wenn für diese Ausgestaltungsform als vernetzbare Materialien TPE-A oder TEE-E verwendet werden, ist es vorteilhaft, wenn diese Materialien für die Vernetzung mit funktionellen Gruppen oder Doppelbindungen im Material modifiziert sind. Dies wird zum Beispiel durch Einsatz von partiell ungesättigten Polyethern oder Polyetherester-Weichblöcken erreicht. Dadurch wird nicht nur eine Vernetzung der Amid- bzw. Esterfunktionen in den teilkristallinen Phasen erreicht, sondern es werden auch die weichen Blöcke dreidimensional vernetzt.

In einer weiteren bevorzugten Ausgestaltungsform wird das vernetzbare Material in Form einen Zweikomponentensystems verwendet. Diese ist vor allem bei höheren Anforderungen hinsichtlich der Steifigkeit der Hartkomponente insbesondere in Verbindung mit höheren Temperaturen und Drücken vorteilhaft. Als Materialien werden bevorzugt HartfWeich-Verbunde aus einem geeigneten Thermoplast und dem korrespondierenden thermoplastischen Elastomer verwendet, wie beispielsweise PA6, PA 612 und TPE-A (GF optional), oder PBT und TEE-E. Durch die Verwendung des Zweikomponentensystems bei chemisch äquivalenten Werkstoffen kann die Haftung im Bereich der Grenzschicht durch Werkstoffkompatibilität verbessert werden. Durch Interdiffusion der Polymerketten im Bereich der Grenzschicht und nachfolgende Vernetzung wird eine optimierte Haftung in der Grenzschicht erreicht. Damit wird außerdem das mechanisch-dynamische Eigenschaftsprofil und die Temperaturstabilität, insbesondere der Weichkomponente, optimiert.

Die abschnittsweise Vernetzung des Schlauchs wird bevorzugt durch Bestrahlung erreicht. Besonders bevorzugt werden dabei β- oder γ-Strahlen verwendet.

Bevorzugt umfasst das vernetzbare Material als Additivkomponente weiterhin einen Vernetzungsverstärker bzw. Koaktivator. Der Vernetzungsverstärker ist nur in geringen Mengenanteilen erforderlich. Durch die Wahl des Vernetzungsverstärkers und dessen Gehalt lässt sich der Vernetzungsgrad bzw. die Vernetzungsdichte des Schlauchs je nach Bedarf einstellen. Beispiele für geeignete Vernetzungsverstärker/Koaktivatoren sind trifunktionelle ungesättigte Verbindungen, wie Triallylsocyanurat (TAIC), Triallylcyanurat (TAC), Trimethylallylisocyanurat (TMAIC), Trimethylolpropanetriacrylat (TMPTR). Diese Verbindungen reagieren unterschiedlich auf Bestrahlung, so dass sich verschiedene Vemetzungsgrade bei gleicher Dosis ergeben.

Der Schlauch gemäß Figur 2 weist mehrere Schichten 1 a, 1 b, 1 c auf und ist abschnittsweise als Wellschlauch ausgebildet. Der Schlauch 1 umfasst vernetzte bzw. starre Endabschnitte 2 und den flexiblen bzw. im Wesentlichen unvernetzten Mittelabschnitt 3. Die Wellung ist in dem gekrümmten Mittelabschnitt 3 des Schlauchs 1 ausgebildet. Das vernetzbare Material bildet vorzugsweise die Innenschicht 1 a und / oder die Außenschicht 1c. Zusätzlich ist zwischen der Innenschicht 1a und der Außenschicht 1 c eine Verstärkungsschicht 1b vorgesehen. Der Schlauch 1 ist dabei bevorzugt mit einem Verstärkungsmaterial, insbesondere mit Glasfasern, verstärkt. Das Verstärkungsmaterial kann alternativ auch vollständig in das vernetzbare Material eingebettet sein. Der in Fig. 2 symbolisierte Mehrschichtaufbau dient dabei lediglich der Veranschaulichung. Alternativ oder zusätzlich zu einer Verstärkungsschicht bzw. einem Verstärkungsmaterial können eine oder mehrere Sperrschichten aus Sperrschichtkunststoff, die einer Strahlenvernetzung zugänglich sind, wie beispielsweise Ethylenvinylalkohol-Copolymer (EVOH) oder Ethylen-Tetrafluorethylen (ETFE) vorgesehen sein, die gegenüber bestimmten Substanzen (z.B. gewissen Kraftstoffen, Öl, Blow-by-Kondensat oder dergleichen) sperrend wirken.

Das Herstellungsverfahren des erfindungsgemäßen Schlauches wird nachstehend mit Bezug auf die beiliegenden Figuren beschrieben.

Zunächst wird ein flexibler Schlauch 1, umfassend zumindest ein vernetzbares Material bereitgestellt. Der Schlauch 1 wird vorzugsweise vollständig im Spritzgussverfahren hergestellt und ist im Wesentlichen unvernetzt und flexibel. Anschließend werden die nicht weiter zu vernetzenden Abschnitte des Schlauchs 1 mit einer Maskierung 4 maskiert bzw. abgedeckt. Die Maskierung 4 verhindert, dass die nicht weiter zu vernetzenden Abschnitte 3 des Schlauchs 1 einer weiteren Vernetzung unterzogen werden. Die Maskierung 4 ist bei Strahlenvernetzung als ein Strahlen abschirmendes Mittel, beispielsweise als Metallfolie 4 ausgebildet.

Nach dem Maskieren der nicht weiter zu vernetzenden Abschnitte 3 des Schlauchs 1 werden die weiter zu vernetzenden Abschnitte 2, die nicht von der Maskierung 4 abgedeckt sind, mit einem Vernetzungsmittel 6 beaufschlagt und vernetzt. Bei der Strahlenvernetzung werden die zu vernetzenden Abschnitte 2 des Schlauchs 1 von einer Strahlungsquelle 5 bestrahlt, wobei die Vernetzungsreaktion in den bestrahlten Bereichen des vernetzbaren Materials ausgelöst wird. Bevorzugt werden hochenergetische Beta (β-) oder Gamma (y-) Strahlen als Vernetzungsmittel 6 verwendet. Durch gezielte Auswahl des Koaktivatorgehalts und der Strahlendosis können die Materialeigenschaften des vernetzbaren Materials beeinflusst und entsprechend der gewünschten späteren Verwendung eingestellt werden.

Nach der Beaufschlagung des Schlauchs 1 mit dem Vernetzungsmittel 6 wird die Maskierung 4 des Schlauchs 1 entfernt. In den zu vernetzenden Abschnitten 2 des vernetzbaren Materials des Schlauchs 1 ist der Vernetzungsgrad lokal erhöht. In den Abschnitten 3 des vernetzbaren Materials des Schlauchs 1, die durch die Maskierung 4 abgedeckt waren, ist der Vernetzungsgrad erheblich geringer als in den mit dem Vernetzungsmittel 6 beaufschlagten Abschnitten 2. So weist der Schlauch 1 bzw. das vernetzbare Material des Schlauchs 1 bereichsweise unterschiedliche Vernetzungsgrade, und - weil ein direkter Zusammenhang zwischen Festigkeit und Vernetzungsgrad besteht - bereichsweise unterschiedliche Festigkeitsgrade auf.

Die Gestaltungsmerkmale des erfindungsgemäßen Schlauchs, insbesondere die Materialauswahl einschließlich Additivkomponente, der Schichtaufbau, die Wellung, die Krümmung sowie die Anordnung der im Wesentlichen unvernetzten und vernetzten Bereiche, sind nach Belieben festlegbar und können jeweils im Hinblick auf den spezifischen Anwendungsfall des Schlauchs bestimmt werden.

## Patentansprüche

1. Flexibler Ladeluftschlauch (1) für Automobile, umfassend zumindest ein vernetzbares Material, wobei der Schlauch (1) bereichsweise unterschiedliche Vernetzungsgrade aufweist, **dadurch gekennzeichnet, dass** der Schlauch (1) in Umfangsrichtung unterschiedliche Vernetzungsgrade aufweist.

2. Flexibler Ladeluftschlauch (1) nach Anspruch 1, wobei der Schlauch (1) in Axialrichtung unterschiedliche Vemetzungsgrade aufweist.

3. Flexibler Ladeluftschlauch (1) nach einem der vorangegangenen Ansprüche, wobei der Schlauch (1) als Additivkomponente einen Vernetzungsverstärker bzw. Koaktivator aufweist.

4. Flexibler Ladeluftschlauch (1) nach einem der vorangegangenen Ansprüche, wobei der Schlauch (1) bereichsweise vernetzte Abschnitte (2) und bereichsweise im Wesentlichen unvernetzte Abschnitte (3) aufweist.

5. Flexibler Ladeluftschlauch (1) nach einem der vorangegangenen Ansprüche, wobei sich vernetzte Abschnitte (2) und im Wesentlichen unvernetzte Abschnitte (3) in Axialrichtung des Schlauchs (1) abwechseln.

6. Flexibler Ladeluftschlauch (1) nach einem der vorangegangenen Ansprüche, wobei der Schlauch (1) abschnittsweise strahlenvernetzt ist.

7. Flexibler Ladeluftschlauch (1) nach einem der vorangegangenen Ansprüche, wobei der Schlauch (1) ein Verstärkungsmaterial aufweist.

8. Flexibler Ladeluftschlauch (1) nach einem der vorangegangenen Ansprüche, wobei der Schlauch (1) glasfaserverstärkt ist.

9. Flexibler Ladeluftschlauch (1) nach einem der vorangegangenen Ansprüche, wobei das vernetzbare Material einen Kunststoff aus der Gruppe der thermoplastischen Elastomere aufweist.

10. Flexibler Ladeluftschlauch (1) nach einem der vorangegangenen Ansprüche, wobei das vernetzbare Material einen vernetzbaren Thermoplast und einen korrespondierenden thermoplastischen Elastomer aufweist.

## Claims

1. Flexible charge-air hose (1) for motor vehicles, comprising at least one crosslinkable material, the hose (1) having regionally different degrees of crosslinking, **characterised in that** the hose (1) has different degrees of crosslinking in the circumferential direction.

2. Flexible charge-air hose (1) according to Claim 1, the hose (1) having different degrees of crosslinking in the axial direction.

3. Flexible charge-air hose (1) according to one of the preceding claims, the hose (1) having a crosslinking promoter or coactivator as additive component.

4. Flexible charge-air hose (1) according to one of the preceding claims, the hose (1) having regionally crosslinked sections (2) and regionally substantially uncrosslinked sections (3).

5. Flexible charge-air hose (1) according to one of the preceding claims, crosslinked sections (2) and substantially uncrosslinked sections (3) alternating in the axial direction of the hose (1).

6. Flexible charge-air hose (1) according to one of the preceding claims, the hose (1) being irradiation-crosslinked in sections.

7. Flexible charge-air hose (1) according to one of the preceding claims, the hose (1) having a reinforcing material.

8. Flexible charge-air hose (1) according to one of the preceding claims, the hose (1) being glass fibre-reinforced.

9. Flexible charge-air hose (1) according to one of the preceding claims, the crosslinkable material comprising a plastics material from the group of the thermoplastic elastomers.

10. Flexible charge-air hose (1) according to one of the preceding claims, the crosslinkable material comprising a crosslinkable thermoplastic and a corresponding thermoplastic elastomer.

## Revendications

1. Tuyau flexible d'air d'alimentation (1) pour automobiles, comprenant au moins un matériau réticulable, le tuyau (1) présentant différents degrés de réticulation suivant les zones, **caractérisé en ce que** le tuyau (1) présente différents degrés de réticulation dans le sens circonférentiel.

2. Tuyau flexible d'air d'alimentation (1) selon la revendication 1, le tuyau (1) présentant différents degrés de réticulation dans le sens axial.

3. Tuyau flexible d'air d'alimentation (1) selon l'une des revendications précédentes, le tuyau (1) présentant comme composant supplémentaire un agent de renforcement de réticulation ou un coactivateur.

4. Tuyau flexible d'air d'alimentation (1) selon l'une des revendications précédentes, le tuyau (1) présentant par zones des parties réticulées (2) et par zones des parties globalement non réticulées (3).

5. Tuyau flexible d'air d'alimentation (1) selon l'une des revendications précédentes, les zones réticulées (2) et les zones globalement non réticulées (3) alternant dans le sens axial du tuyau (1).

6. Tuyau flexible d'air d'alimentation (1) selon l'une des revendications précédentes, le tuyau (1) étant dans certaines parties réticulé par irradiation.

7. Tuyau flexible d'air d'alimentation (1) selon l'une des revendications précédentes, le tuyau comportant un matériau de renforcement.

8. Tuyau flexible d'air d'alimentation (1) selon l'une des revendications précédentes, le tuyau (1) étant renforcé par des fibres de verre.

9. Tuyau flexible d'air d'alimentation (1) selon l'une des revendications précédentes, le matériau réticulable comportant une matière plastique du groupe des élastomères thermoplastiques.

10. Tuyau flexible d'air d'alimentation (1) selon l'une des revendications précédentes, le matériau réticulable comportant un thermoplastique réticulable et un élastomère thermoplastique correspondant.
